# EUROPÄISCHE PATENTSCHRIFT

(11) **EP 1 029 638 B1**
(45) Veröffentlichungstag und Bekanntmachung des Hinweises auf die Patenterteilung: **25.05.2005**
(21) Anmeldenummer: 00103628.4
(22) Anmeldetag: 21.02.2000
(51) Int. Cl.: B25J 19/00

(54) **Roboterteil mit einem Schlauchhalter**
Robot member with a support for hoses
Membre de robot muni d'un support pour cables

(30) Priorität: 19.02.1999 DE 29902947 U
(43) Veröffentlichungstag der Anmeldung: 23.08.2000
(73) Patentinhaber: KUKA Roboter GmbH, 86165 Augsburg (DE)
(72) Erfinder: Hartmann, Georg, 86551 Aichach (DE)
(74) Vertreter: Lempert, Jost, Dipl.-Phys. Dr. rer.nat.

(56) Entgegenhaltungen:
- DE-A- 3 434 899
- DE-U- 29 908 623
- US-A- 5 816 736

## Beschreibung

Die Erfindung betrifft ein Roboterteil nach dem Oberbegriff des Anspruchs 1.

Durch einen Schlauchhalter folgt der Schlauch den Bewegungen des Roboterarms bzw. der Roboterhand, wobei bei der bekannten Ausführung der Schlauchhalter an dem Werkzeug fest montiert ist. Dabei ist von Nachteil, dass die zur Festlegung des Schlauchhalters am Werkzeug spezielle Bohrungen an dem Werkzeug erforderlich sind, die je nach Einsatz nachträglich anzubringen sind. Daraus resultierend ist der Schlauchhalter in seiner Stellung am Werkzeug fixiert, wobei eine eventuell notwendige Lageänderung des Schlauchhalters zu dem Werkzeug aufwändig ist, da gegebenenfalls noch Bohrungen anzubringen sind.

Die DE 299 08 623 U1 und die DE 299 02 947 U1 zeigen Roboter, bei denen am freien vorderen Ende der Roboterhand im Bereich des Befestigungsflansches um dessen Umfang ein Halter kraftschlüssig durch Spannen mittels von zwei Halbringteilen mittels Schrauben kraftschlüssig angebracht ist; eines der Halteteile weist einen radial erstreckenden Ansatz auf, an dem ein Schlauchhalter für den Schlauch festgelegt ist. Nachteilig ist, dass der Schlauchhalter sich beim Anbringen in axialer Richtung verschieben kann und damit keine eindeutige Position in axialer Richtung erreichbar ist.

Der Erfindung liegt die Aufgabe zugrunde, unter Vermeidung der vorgenannten Nachteile ein Roboterteil mit einem an diesem angeordneten Schlauchhalter vorzuschlagen, bei dem unter sicherer Fixierung im Betriebszustand angulare Lageänderungen des Schlauchhalters zu dem Roboterteil einfach durchgeführt werden können.

Erfindungsgemäß wird diese Aufgabe mit einem Roboterteil der eingangs genannten Art gelöst, das die kennzeichnenden Merkmale des Anspruchs 1 aufweist.

Diese Verbindung zwischen dem Schlauchhalter und dem Roboterteil, wie insbesondere der Roboterhand, ist axial formschlüssig in einer Führung, die als Umfangsnut ausgebildet sein kann, gegen Verdrehung lediglich durch Verspannen gehalten. Derart ist die Verbindung zwischen den beiden Bauteilen in einfacher Weise gesichert, ohne dass spezielle Vorkehrungen zur Fixierung notwendig sind. Das Formschlusselement, Führung oder Nut, kann durch den Fertigungsvorgang Drehen leicht und einfach hergestellt werden. Die Verspannung kann in verschiedenen radialen Positionen des Schlauchhalters zu dem Roboterteil erfolgen, womit lediglich durch Lösen der Verspannung eine leichte und unkomplizierte Änderung der Ausrichtung des Schlauchhalters möglich ist, ohne dass dabei die axiale Position des Schlauchhalters verändert wird. Der Schlauchhalter ist so angular frei einstellbar an der Roboterhand befestigt. Alle Vorteile der bisherigen festen Fixierung des Schlauchhalters bleiben erhalten. In bevorzugter Ausgestaltung kann dabei vorgesehen sein, dass das Roboterteil, wie insbesondere eine Roboterhand, an seinem freien Ende eine, gegebenenfalls profilierte Flanschplatte aufweist, die völlig geschlossen oder mit einer zentralen Öffnung ausgebildet sein kann. Die Flanschplatte kann lösbar, wie durch achsparallele Verschraubung festgelegt sein. Am vorderen Ende des Roboterteils, wie der Roboterhand und insbesondere an deren Handflansch wird das Werkzeug starr angebracht.

In weiteren bevorzugten Ausgestaltungen ist vorgesehen, dass der Schlauchhalter eine teilbare Klemmschelle und einen radial nach außen gerichteten, stabförmigen Fortsatz, der insbesondere weitgehend in der Mitte einer Schellenhälfte angeordnet, aber auch asymmetrisch zu einer Schellenhälfte angeordnet sein kann, aufweist. Die teilbare Klemmschelle kann bei einer beabsichtigten Lageänderung des Schlauchhalters zu dem Roboterteil gelockert und in der neuen Position wieder so durch Verspannen fixiert werden, dass auch in dieser Position eine feste Verbindung mit dem Roboterteil gebildet ist. Mit Vorteil ist dabei der stabförmige Fortsatz einstückig mit der einen Klemmschellenhälfte. Weiter mit Vorteil sind die Klemmschellenhälften durch Befestigungsmittel klemmbar, womit bereits durch Lösen der Befestigungsmittel die kraftschlüssige Verbindung zwischen dem Schlauchhalter und dem Roboterteil gelöst und diese somit gegeneinander verdrehbar sind.

An dem an der einen Schellenhälfte angeordneten und radial nach außen gerichteten, stabförmigen Fortsatz sind Schlauchaufnahmen zur Aufnahme mindestens eines Schlauches, der Kabel anschließt, an den Schlauch zur Energieversorgung angeordnet.

In weiter vorteilhafter Ausgestaltung ist die Schlauchaufnahme, die vorzugsweise mindestens eine Halteschelle für den Schlauch aufweist, in der das Schlauchende gehalten wird, drehbar und fixierbar (klemmbar) auf dem stabförmigen Fortsatz angeordnet. Dies erhöht die Beweglichkeit des Schlauches gegenüber dem Roboterteil, und ermöglicht verschiedene einstellbare Abgangswinkel zwischen Handflansch und Schlauch.

Weitere Vorteile und Merkmale der Erfindung ergeben sich aus der nachfolgenden Beschreibung unter Bezugnahme auf die Zeichnungen eines Ausführungsbeispiels. Dabei zeigt:
- Fig. 1: einen Roboter in Seitenansicht;
- Fig. 2: den Roboter in Stirnansicht entsprechend dem Pfeil II in Fig. 1 und;
- Fig. 3: einen Schnitt durch eine Flanschplatte mit aufgesetztem Schlauchhalter (von dem lediglich die Klemmschellenteile dargestellt sind);
- Fig. 4: einen Schlauchhalter in perspektivischer Darstellung;
- Fig. 5: eine bevorzugte Ausgestaltung des Schlauchhalters in perspektivischer Darstellung zur Verdeutlichung der kraftschlüssigen Festlegung der Spannstellen für den Schlauch am stabförmigen Fortsatz des Schlauchhalters; und
- Fig. 6: eine Seitenansicht auf den Schlauchhalter der Fig. 5.

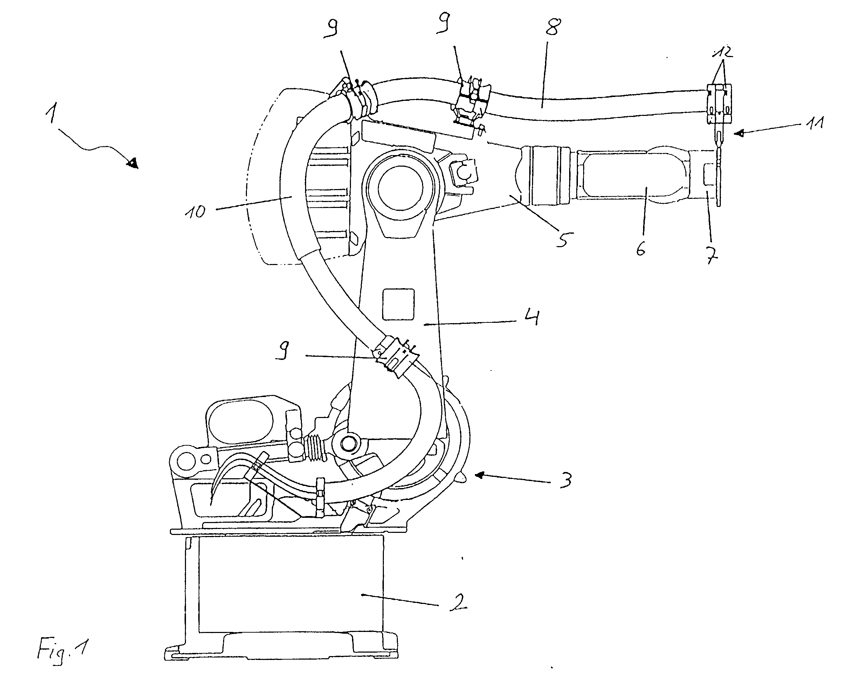

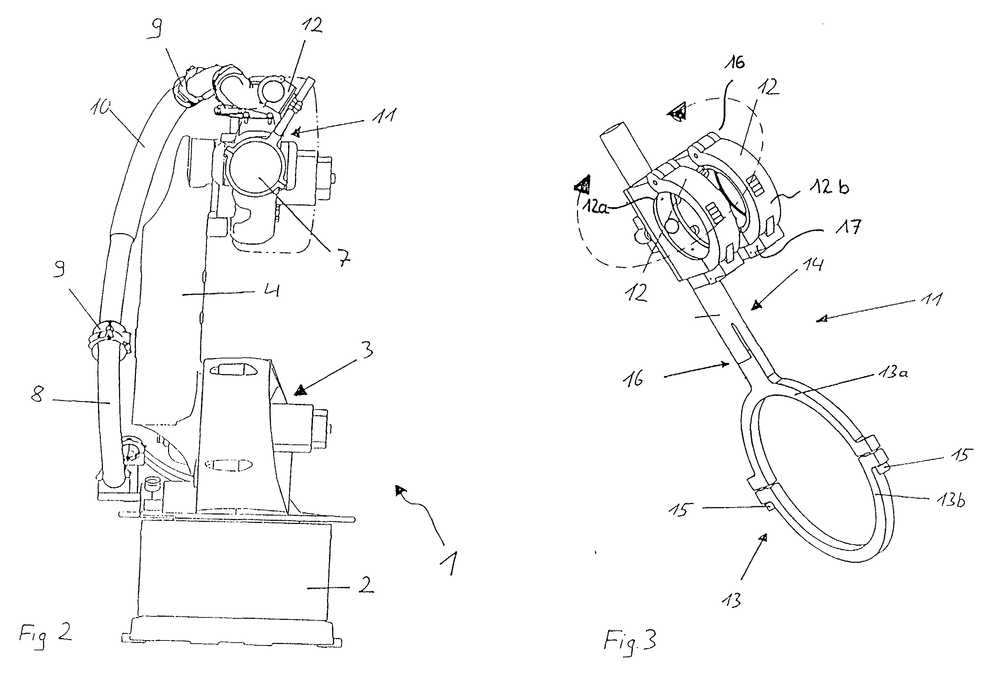

Der Roboter 1 der Fig. 1 und 2 weist an einem freien Ende eines Roboterarms 5 eine Roboterhand 6 auf, die wiederum über zwei Achsen verschwenkbar ist. An dem vorderen freien Ende der Roboterhand 6 ist ein Flansch 7 angeordnet, an dem ein nicht dargestelltes Werkzeug befestigt werden kann.

In der Regel werden Kabel zur Energieversorgung an der Außenseite des Roboters geführt, wobei die Kabel zum Schutz vor Beschädigungen von einem Schlauch 8 umgeben sind, der entlang der Außenseite des Roboters geführt und zumindest punktuell an diesem festgelegt ist.

Der Schlauch 8 weist Rippen auf und ist mit Verschleißringen 9 sowie einer Druckfeder 10 versehen, die letztere ihn bei Entlastung im Hinblick auf die Roboterbewegung in eine Ausgangslage zurückführt.

An dem vorderen, werkzeugseitigen Ende des Schlauches 8 ist dieser an einem Schlauchhalter 11 festgelegt, der wiederum an dem Flansch 7 der Roboterhand 6 als ein Roboterteil mit kreisförmiger oder zylindrischer Außenkontur angeordnet ist.

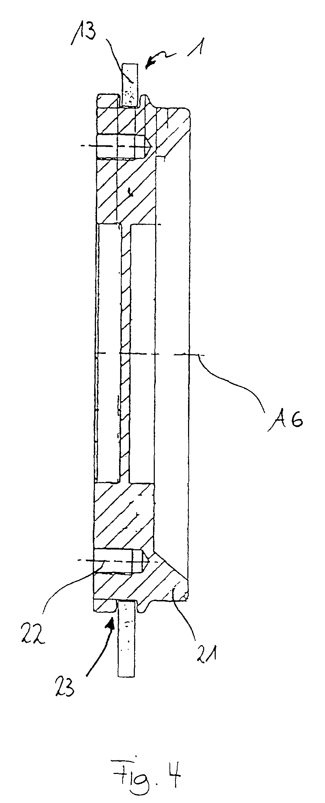

Der Schlauchhalter 11 ist am vorderen Ende des Roboterteils, wie der Roboterhand 6, in einer Umfangsnut gegen axiale Verschiebung formschlüssig festgelegt. Die Umfangsnut kann direkt an dem vorderen um die A6-Achse des Roboters drehbaren Handteil ausgebildet sein. Dieses kann eine Flanschplatte 21 aufweisen, die durch Verschraubungen, hier angedeutet durch axiale Gewindebohrungen 22 an dem restlichen Roboterteil lösbar festgelegt sein kann. In der Flanschplatte ist über deren Umfang nach dem im Fig. 3 dargestellten Ausführungsbeispiel eine Umfangsnut 23 eingedreht, in der der Schlauchhalter 11 durch eine Klemmschelle, die unter Bezug auf die Fig. 4 näher beschrieben wird, durch Kraftschluss drehfest festgespannt.

Die Flanschplatte 11 ist, wie dargestellt, ein Profilteil. Sie kann vollständig geschlossen sein, wie ebenfalls dargestellt. In gewissen Fällen kann auch ein Durchbruch vorhanden sein, durch den beispielsweise eine Antriebswelle zu einem an der Hand angeordneten Werkzeug führt.

Wie in Fig. 4 gezeigt, besteht der Schlauchhalter 11 aus einer Klemmschelle 13, die in die Klemmschellenhälften 13a und 13b teilbar ist sowie aus dem mit der Klemmschellenhälfte 13a einstückigen, stabförmigen Fortsatz 14. Wie aus Fig. 2 ersichtlich ist, umschließt die Klemmschelle 13 den als Lager ausgebildeten Flansch 7 der Roboterhand 6 so, dass beim Anziehen der als Befestigungsmittel der Klemmschelle 13 ausgebildeten Schrauben 15 die Klemmschelle 13 und damit der Schlauchhalter 11 eine kraftschlüssige Verbindung mit dem Flansch 7 bildet. Nach Lösen der Klemmschrauben 15 kann der Schlauchhalter 11 beliebig auf dem Flansch 7 gedreht und in einer frei wählbaren Drehlage kraftschlüssig festgelegt werden.

Der Schlauch 8 ist an dem Schlauchhalter 11 mittels zwei Halteschellen 12 festgelegt, wobei, wie aus Fig. 3 ersichtlich ist, die Halteschellen 12 Klappschellen sind.

Sie weisen zwei über ein Gelenk 16 verbundene Schellenhälften 12a, 12b auf, die durch einen Verschluss 17, wie einen Schnappverschluss, verbindbar und schließbar sind, wobei sie einen kabelführenden Schlauch (nicht dargestellt) aufnehmen.

Diese Halteschellen 12 sind ihrerseits in beliebiger Drehlage auf dem Stab 14 fixierbar.

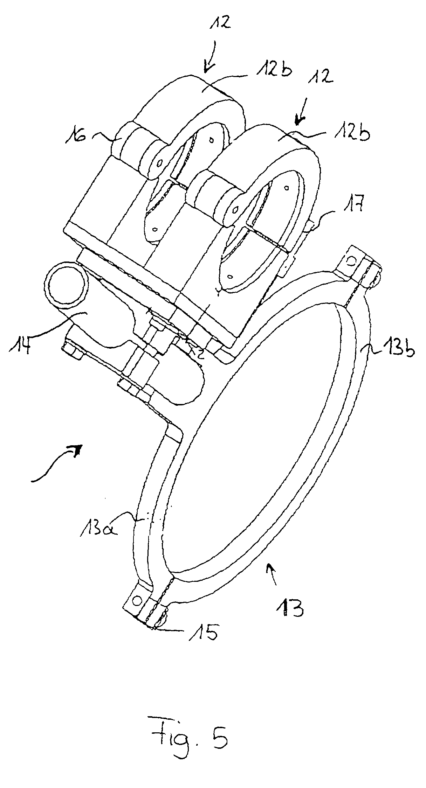

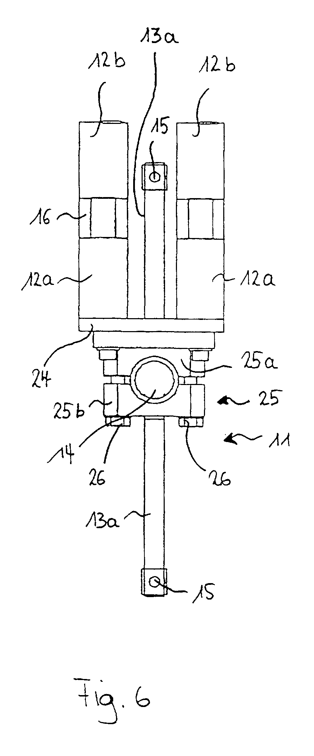

Die Fig. 5 und 6 zeigen näher die kraftschlüssige Festlegung der Halteschellen 12. An den Schellenhälften 12a, 12b ist eine Platte 24 im dargestellten Ausführungsbeispiel einstückig ausgebildet, die eine Spannschellenhälfte 25a trägt und insbesondere mit dieser einstückig ausgebildet ist, die wiederum zusammen mit einer ihr zugeordneten Spannschellenhälfte 25b eine Klemmschelle 25 zur kraftschlüssigen Festlegung am Stab 14 bildet. In der Spannschellenhälfte 25a sind hierzu parallel angeordnete Gewindebohrungen (nicht dargestellt) vorgesehen, in die Schrauben 26, die durch die Spannschellenhälfte 25b hindurchtreten, ein- und festschraubbar sind.

Durch Lösen der Schrauben 26 kann die durch die Halteschelle 12 gebildete Schlauchaufnahme am Stab 14 axial und angular verstellt und durch Festspannen der Schrauben 26 in der gewünschten eingestellten axialen und angularen Position festgelegt werden. Hierdurch wird insbesondere erreicht, dass eine Verschiebung der Schlauchaufnahme in radialer Richtung (zur A6-Achse) sowie eine angulare Ausrichtung möglich ist.

### Bezugszeichenliste

- 1: Roboter
- 2: Sockel
- 3: Roboterbasis
- 4: Schwinge
- 5: Roboterarm
- 6: Roboterhand/Roboterteil
- 7: Flansch/Lager
- 8: Schlauch
- 9: Verschleißringe
- 10: Druckfeder
- 11: Schlauchhalter
- 12: Schellen
- 13: Klemmschelle
- 13a,b: Klemmschellenhälfte
- 14: stabförmiger Fortsatz
- 15: Klemmschrauben/Befestigungsmittel
- 16: Kippgelenk
- 17: Verschluß
- 21: Flanschplatte
- 22: Gewindebohrung
- 23: Umfangsnut
- 24: Platte
- 25: Klemmschelle
- 25a,b: Spannschellenhälfte
- 26: Schrauben

## Patentansprüche

1. Roboterteil, mit einem an einer Roboterhand (5) angeordneten Werkzeug und mit einem Schlauchhalter (11) zum Halten eines Schlauches (12), wobei der Schlauchhalter (11) derart mit der Roboterhand (5) verbunden ist, dass er durch Drehen um die Roboterhand (A6-Achse) in eine wählbare Position bringbar ist, in welcher er drehfest mit der Roboterhand (5) festlegbar ist, **dadurch gekennzeichnet, dass** der Schlauchhalter (11) in Richtung der Achse der Roboterhand (A6-Achse) formschlüssig festgelegt ist und dass zum Halten und angularen Festlegen des Schlauchhalters (11) eine ringförmige Führung oder Umfangsnut (23) vorgesehen ist.

2. Roboterteil nach Anspruch 1, **gekennzeichnet durch** einen Handflansch (21), an dem die axiale Festlegung erfolgt.

3. Roboterteil nach Anspruch 2, **dadurch gekennzeichnet, dass** der Handflansch (21) durch axiale Verschraubungen (22) lösbar befestigt ist.

4. Roboterteil nach einem der Ansprüche 1 bis 3, **dadurch gekennzeichnet, dass** der Schlauchhalter (11) zur Festlegung am Roboterteil (7, 21) eine geteilte Klemmschelle (13) aufweist, die in der Führung (23) festspannbar ist.

5. Roboterteil nach einem der Ansprüche 1 bis 4, **dadurch gekennzeichnet, dass** der Schlauchhalter (11) einen radial nach außen gerichteten stabförmigen Fortsatz (14) aufweist.

6. Roboterteil nach Anspruch 5, **dadurch gekennzeichnet, dass** der stabförmige Fortsatz (14) einstückig mit einer Klemmschellenhälfte (13a) der Klemmschelle (13) ist.

7. Roboterteil nach einem der Ansprüche 4 bis 6, **dadurch gekennzeichnet, dass** ein Lager (7) zur Anordnung der Klemmschelle (13) in einer durch Drehen frei wählbaren Position vorgesehen ist.

8. Roboterteil nach einem der Ansprüche 1 bis 7, **dadurch gekennzeichnet, dass** die Klemmschellenhälften (13a, 13b) durch Befestigungsmittel (15) klemmbar sind.

9. Roboterteil nach einem der Ansprüche 1 bis 8, **dadurch gekennzeichnet, dass** der Schlauchhalter (11) auch Aufnahmen (12) zur Aufnahme von Schläuchen aufweist.

10. Roboterteil nach Anspruch 9, **dadurch gekennzeichnet, dass** eine Schlauchaufnahme (12) durch Halteschellen für die Schläuche gebildet ist.

11. Roboterteil nach Anspruch 9 oder 10, **dadurch gekennzeichnet, dass** die Schlauchaufnahme (12) lösbar am stabförmigen Fortsatz (14) des Schlauchhalters (11) befestigt ist.

12. Roboterteil nach einem der Ansprüche 9 bis 11, **dadurch gekennzeichnet, dass** die Schlauchaufnahme (12) kraftschlüssig am stabförmigen Fortsatz (14) festgelegt ist.

## Claims

1. Robot member with a tool placed on a robot hand (5) and having a hose support (11) for supporting a hose (12), the hose support (11) being connected to the robot hand (5) in such a way that it can be brought into a selectable position by rotation about the robot hand (A6 axis), in which it can be secured connected to rotate with the robot hand (5), **characterized in that** the hose support (11) is positively secured in the direction of the robot hand axis (A6 axis) and that an annular guide or circumferential groove (23) is provided for supporting and angularly securing the hose support (11).

2. Robot member according to claim 1, **characterized by** a hand flange (21) on which axial securing takes place.

3. Robot member according to claim 2, **characterized in that** the hand flange (21) is detachably fixed by axial screw couplings (22).

4. Robot member according to one of the claims 1 to 3, **characterized in that** the hose support (11) has a split clamp collar (13), fixable in the guide (23), for securing on robot member (7, 21).

5. Robot member according to one of the claims 1 to 4, **characterized in that** the hose support (11) has a radially outwardly directed, rod-shaped extension (14).

6. Robot member according to claim 5, **characterized in that** the rod-shaped extension (14) is constructed integrally with a clamp collar half (13a) of the clamp collar (13).

7. Robot member according to one of the claims 4 to 6, **characterized in that** a bearing (7) is provided for placing the clamp collar (13) in a position freely selectable by rotation.

8. Robot member according to one of the claims 1 to 7, **characterized in that** the clamp collar halves (13a, 13b) can be clamped by fastening means (15).

9. Robot member according to one of the claims 1 to 8, **characterized in that** the hose support (11) also has receptacles (12) for receiving the hoses.

10. Robot member according to claim 9, **characterized in that** a hose receptacle (12) is formed by retaining collars for the hoses.

11. Robot member according to claim 9 or 10, **characterized in that** the hose receptacle (12) is detachably fixed to the rod-shaped extension (14) of the hose support (11).

12. Robot member according to one of the claims 9 to 11, **characterized in that** the hose receptacle (12) is frictionally fixed to the rod-shaped extension (14).

## Revendications

1. Partie de robot comprenant un outil disposé sur une main de robot (5) et un support pour tuyau souple (11) pour le maintien d'un tuyau souple (8), dans lequel le support pour tuyau souple (11) est relié à la main de robot (5) de telle manière qu'on peut l'amener, par pivotement autour de la main de robot (axe A6), dans une position à choisir, dans laquelle il peut être fixé par assemblage rigide sur la main de robot (5), **caractérisée en ce que** le support pour tuyau souple (11) est fixé à ajustement de forme en direction de l'axe de la main de robot (axe A6) et **en ce que** l'on prévoit un guidage ou une rainure périphérique (23) annulaire pour maintenir et fixer angulairement le support pour tuyau souple (11).

2. Partie de robot selon la revendication 1, **caractérisée par** une bride de main (21) sur laquelle on réalise la fixation axiale.

3. Partie de robot selon la revendication 2, **caractérisée en ce que** la bride de main (21) est montée amovible par des vissages axiaux.

4. Partie de robot selon l'une quelconque des revendications 1 à 3, **caractérisée en ce que** le support pour tuyau souple (11) présente, pour sa fixation sur la partie de robot (7,21), une bride de serrage (13) divisée en deux parties, pouvant être fixée dans le guidage (23).

5. Partie de robot selon l'une quelconque des revendications 1 à 4, **caractérisée en ce que** le support pour tuyau souple (11) présente un prolongement (14) en forme de tige dirigé radialement vers l'extérieur.

6. Partie de robot selon la revendication 5, **caractérisée en ce que** le prolongement (14) en forme de tige est d'une seule pièce avec une moitié de bride de serrage (13a) de la bride de serrage (13).

7. Partie de robot selon l'une quelconque des revendications 4 à 6, **caractérisée en ce que** l'on prévoit un embout (7) pour recevoir la bride de serrage (13) dans une position pouvant être librement choisie par pivotement.

8. Partie de robot selon l'une quelconque des revendications 1 à 7, **caractérisée en ce que** les moitiés de bride de serrage (13a, 13b) peuvent être serrées par des moyens de fixation (15).

9. Partie de robot selon l'une quelconque des revendications 1 à 8, **caractérisée en ce que** le support pour tuyau souple (11) présente également des logements (12) pour recevoir les tuyaux souples.

10. Partie de robot selon la revendication 9, **caractérisée en ce qu'**un logement pour tuyau souple (12) est constitué par des colliers de maintien pour les tuyaux souples.

11. Partie de robot selon la revendication 9 ou 10, **caractérisée en ce que** le logement pour tuyau souple (12) est fixé amovible sur le prolongement (14) en forme de tige du support pour tuyau souple (11).

12. Partie de robot selon l'une quelconque des revendications 9 à 11, **caractérisée en ce que** le logement pour tuyau souple (12) est fixé à ajustement serré sur le prolongement (14) en forme de tige.
